Europäisches Patentamt

European Patent Office

Office européen des brevets

(19)

(11) **EP 1 378 829 A1**

(12) **EUROPEAN PATENT APPLICATION**

(43) Date of publication:
**07.01.2004 Bulletin 2004/02**

(51) Int Cl.⁷: **G06F 9/445**

(21) Application number: **02291704.1**

(22) Date of filing: **05.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **ALCATEL**<br>**75008 Paris (FR)** | (72) Inventor: **Mussini, Marco**<br>**20133 Milano (IT)**<br><br>(74) Representative: **Lamoureux, Bernard et al**<br>**Alcatel**<br>**Intellectual Property Department,**<br>**Vimercate**<br>**Via Trento, 30**<br>**20059 Vimercate (IT)** |

(54) **Process for allowing the same java-based graphical user interface application to run either as stand-alone application or as an applet**

(57)     The present invention provides for a process for allowing the same Java-based GUI application to run either as stand-alone application or as an Applet, in which the application is developed as an Applet, i.e. its main class is a direct or indirect subclass of Applet or JApplet, but at the same time it implements the usual entry point method for stand-alone appli cations (i.e. the main() method), that's the starting point for the application.

FIG. 1

**Description**

The present invention relates to a process for allowing the same Java-based GUI application to run either as stand-alone application or as an Applet.

Java(™) programs can be designed for deployment in one of two known run-time configurations: Application and Applet.

Application is the traditional way to deploy software, with an explicit installation phase where all necessary program files and configuration files are copied, with a well-defined tree organization, on the mass storage of the target run-time system, and then several execution phases where control is transferred to the entry point of the application which begins operating as designed.

This deployment scheme has the following pros and cons:

- Since program files are permanently stored on the target machine, application startup is immediate.
- To start the application, a specific, explicit command must be issued by the user.
- When the application starts, it is usually independent from other applications, i.e. its lifetime is not necessarily correlated to other applications' lifetime.
- Space is permanently occupied on each target machine's mass storage for holding program files and configuration files.
- When a new version of the program is released, in order to update the program on the target machine, another installation procedure must be done, either integral or differential/incremental [upgrade].

Applet deployment, on the other hand, has a different goal, and as a consequence of this, it differs from the previous scenario in many respects:

- Applet code does not reside permanently on mass storage of the target run time system. It is stored on the mass storage of a centralized server, from which it is downloaded every time the Applet is started. This greatly simplifies administration of the target machines. If a new version of the software is released, it is not necessary to reinstall it on all target machines: it is sufficient to reinstall it on the centralized server and all target machines will download the new version at the first occasion. In situations where the same application must run on hundreds of target machines, this is a tremendous advantage over traditional installation scheme.
- The Applet appears to the user as "embedded" in a Web page, and it is transparently downloaded (from the centralized server) and activated (when download is complete) during a web browsing session without explicit commands.
- Download prior to activation takes time, therefore, execution start cannot be immediate.
- One or more Applets run "in" a web browser process (though possibly in several windows). When the web browser exits, all Applets also terminate, and their program files and configuration files, which were previously downloaded by the web browser, are "forgot" (unless caching is used to achieve long-term persistency of already downloaded program files).

The two deployment techniques described above differ because they address different situations with different needs.

Situations best handled with Applet deployment techniques:

- a large number of target machines with good processing power;
- frequent releases of new versions of the software;
- availability of a fast network between target machines and centralized server;
- software of small to medium size;
- software that can be written in Java;

Situations candidate for traditional deployment ("application").

- very large and complex applications (it would take too long to download their files);
- few target machines (it is not unacceptable to reinstall all target machines when a new version of the software is released);
- stable software with infrequent new releases (it is not unacceptable to reinstall all target machines when a new version of the software is released);
- slow network between target machines and server (application download would be too slow);
- non-Java software (does not support Applet deployment; would require other less portable and less general techniques to achieve Applet-like deployment).

If a given software has to run in only one of these situations, then it is normal to design and develop it as an Applet only or as an application only, according to the deployment scheme that best fits the expected run-time situation.

However, often it happens that the environment where a given software will have to run cannot be predicted precisely. It is therefore desirable that the software is able to run indifferently as an Applet or as an application.

One possible way to fulfill a frequent technical requirement coming from some users, like customers of a telecommunications network management system, i.e. to make GUI (Graphic User Interface) applications accessible via web, without any prior installation on the client machine other than operating system and web browser, is to develop them as Java Applets.

This is especially useful when applications are accessed and activated remotely. However the traditional usage pattern (e.g. static application installation on a workstation in a network operation center) is still better in some situations especially for certain very large scale applications.

Therefore Java GUI applications should be developed in such a way as to have them accessible both locally (as stand-alone applications) and remotely (as Applets), without having to develop two specialized versions of them, and to optimize time to develop, human and computer resources.

A possible known solution is to design two versions of the software, one for application deployment and the other for Applet deployment. This fits the user's needs well, but places an extra burden on the organization which developed the software, because two versions, rather than one, must be maintained, distributed, archived.

A known process is proposing the so called "Java$^{(TM)}$ Web Start" technology to download, install and run an application in a way as flawless as possible. The underlying model is a hybrid between Applet (downloaded from the network *and* executed within a web browser; not installed on the client machine) and application (deployed once forever, usually not over the web but from physical media; installed on the client machine; executed without a web browser). This hybrid is yet another way to run applications, and requires a well-defined organization and packaging, and is another way of deploying and executing the software. Rather than coping with the current execution environment situation for Java applications, this solution tries to change the rules by pushing for a new model. Therefore this process does not address the problem of developing Java GUI applications in such a way as to have them accessible both locally (as stand-alone applications) and remotely (as Applets), without developing two specialized versions of them.

Therefore in view of the known solutions, that are not quite optimal, it is the main object of the present invention to provide a process for allowing the same Java-based GUI application to run either as stand-alone or as an Applet.

The basic idea of the present invention is that the application is developed as an Applet, i.e. its main class is a direct or indirect subclass of Applet or JApplet, but at the same time it implements the usual entry point method for stand-alone applications (i.e. the main() method), that's the starting point for the application.

Programming by objects means that the application is made by class instances; JApplet is a known extended version of Applet.

The entry points to application code are then organized like Applet requires (i.e. with the equivalents of the init(), start() and stop() methods), so that it gets called in the proper sequence both when initialization occurs in the Applet environment and when initialization occurs in the Application environment.

In Applet mode, init(), start() and stop() will be called in the usual way and with the usual semantics. In Application mode, the only requirement is that the main(..) method calls init() and start() in the correct sequence

This way the software can be designed so that it can run indifferently as an Applet or as an Application, also with appropriate design of the initialization and start-up code of the application.

These and further objects are achieved by means of a method as described in the attached claims, which are considered an integral part of the present description.

The invention will become fully clear from the following detailed description, given by way of a mere exemplifying and non limiting example, and with reference to the annexed drawing, in which:

Figure 1 shows the activation flow in the case of Applet mode;
Figure 2 shows the activation flow in the case of Apllication mode.

In a preferred embodiment of the invention, in order to avoid explicit redundancy in application code, the application supplies an implementation for the four known methods: applnit(), appStart(), appStop() and main(...), declared by a special wrapper class W which copes with all details involved in dealing with the Applet-mode or the stand-alone-mode execution scenario.

As known, a method is a procedure performed on a class or a class instance; a class defines data as well as methods to handle and access the associated data.

Therefore in a Library of code supporting the invention, the following component is made available:

A wrapper class W is provided that hides all integration details (a class defines data as well as methods to handle and access the associated data). This class is a subclass of the known Applet or JApplet classes, and defines three abstract methods - applnit(), appStart(), appStop() - and one concrete method - go(), which calls applnit() and then appStart(). It also implements the init(), start() and stop() methods which perform any preliminary initializations and then forward the call to applnit(), appStart() and appStop(), respectively.

In the Application:

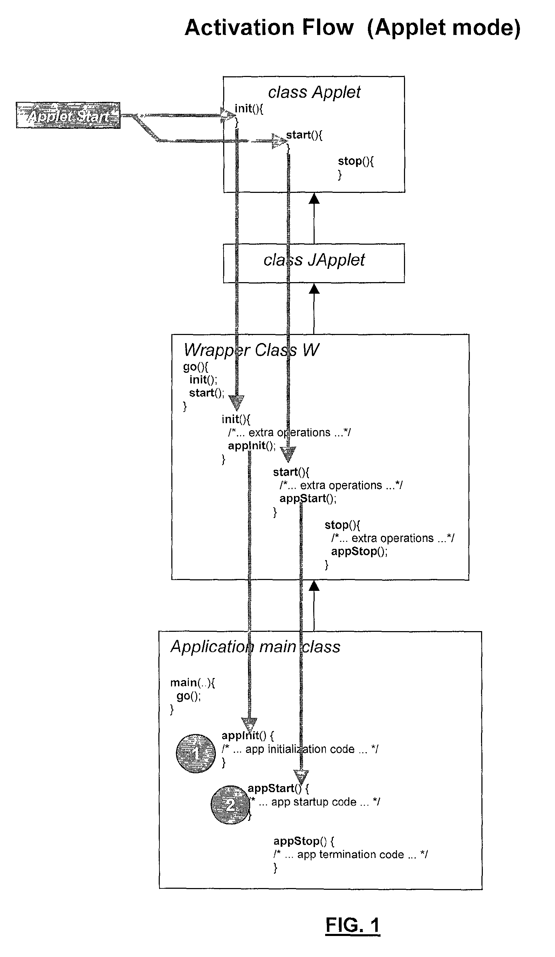

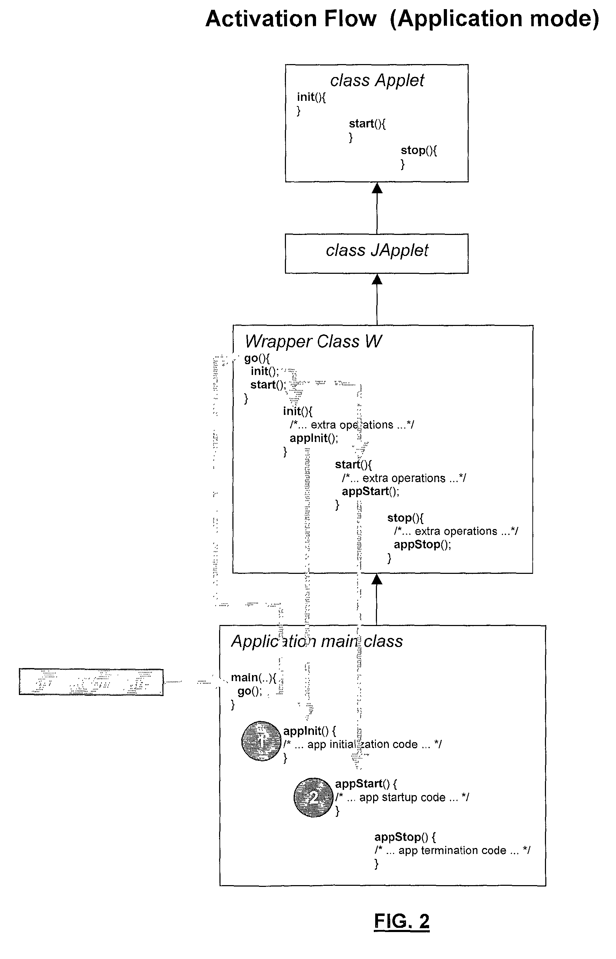

The application main class derives from the wrapper class W rather than deriving directly from Applet or JApplet. Furthermore, the application class should implement the applnit(), appStart(), and appStop() methods with application-specific behavior, and it should implement the main() method so that it exactly calls the go() method (see Figs. 1 and 2).

The applnit() method may perform one-time-only initialization actions; appStart() method may perform application activation actions; and appStop() method may perform application deactivation actions.

As a consequence, the application code can expect that, independently of the execution mode, the activation pattern will always be: applnit(), then appStart(), then, eventually, appStop().

The difference between running as Applet or as stand-alone becomes transparent to the application.

The following comparison of the structure of Applets and applications clarifies the proposed solution.

As from Fig. 1, Applet entry-point methods look like this:

```
public class MyAppletMainClass extends Applet {
    public void init()    {
    }
    public void start()   {
    }
    public void stop()    {
    }
}
```

The main class of an Applet must:

**derive from the Applet class** (or from JApplet, in case of Applets based on the Swing GUI toolkit).
**implement the init() method**, which will be called once for all at the beginning of the Applet's lifetime, to let the software perform any initialization required.
**implement the start() method**, which will be called immediately after the init() method returns, as well as every time the web page containing the Applet instance is redisplayed after it was left (see below)
**implement the stop() method**, which will be called every time the user leaves the page containing the Applet instance. This may happen, for example, when another page is opened (possibly following a link on the page, or pressing the Back button of the web browser). This method lets the Applet stop using processing resources as soon as they become temporarily not needed because the Applet is not visible on screen. (for this reason this method could be described as a "suspend" method) This method is also called before the Applet is re-loaded on user request.

On the other hand, as from Fig. 2, Applications have the following entry-point code:

```
public class MyApplicationMainClass {
    public static void main(String [] args)  {
    }
}
```

The only requirement is that there must be a main(String [] args) method, which is the entry point of the application. Execution will start by calling this method. It is up to the application to organize its initialization, execution and "suspend" phases; unlike what happens for Applets, there is no mandatory rules about this organization.

The two code structures are merged to obtain the following hybrid structure, namely the wrapper class W, which is suitable for both Application mode deployment and Applet mode deployment, as from both Figs. 1 and 2:

```
public abstract class DualModeMainClass extends Applet {
    public void init()    {
        appInit();
    }
    public void start()   {
        appStart();
    }
    public void stop()    {
        appStop();
    }
    public void go()      {
        appInit();
        appStart();
    }
    public abstract void appInit();
    public abstract void appStart();
    public abstract void appStop();
}
```

This wrapper class W is the ancestor class for the software's main class. It derives from Applet (or JApplet) and it defines the init(), start(), and stop() methods, in compliance with Applet-mode. These methods must not be redefined in user code; they are implemented so that they call the appInit(), appStart() and appStop() methods, respectively.

On the other hand, it is up to the application programmer to provide a derived class with an implementation of the appInit(), appStart() and appStop() methods, respectively, which have exactly the same semantics of the init(), start(), and stop() methods, respectively.

The go() method is also provided by this class. Its purpose is to call appInit() and appStart(), thus producing the same effects observed by an Applet during its start-up phase. The go() method must be called from the main(String [] args) method, which must also be provided in the user-implemented derived class.

A default implementation for the main() method is provided; this implementation does the essential job and it is sufficient unless there are special needs. In this case, it is necessary to override it in the subclass; otherwise no effort is required.

The user-implemented derived class must look like this:

```
public class MyDualModeMainClass extends DualModeMainClass  {
        public static void main(String [] args)     {
                MyDualModeMainClass m=new MyDualModeMainClass(...);
                /* ...user-provided specific main() code... */
                m.go();
        }
        public void appInit()        {
                /* ...user-provided initialization code... */
        }
        public void appStart()       {
                /* ...user-provided (re)start code... */
        }
        public void appStop()        {
                /* ...user-provided suspend code... */
        }
}
```

There must be a main(...) method which creates an instance of the user-defined subclass of DualModeMainClass and then calls the go() method on it. The user-provided main(...) method must not interfere with appInit() and appStart() and it must call go() in its last statement.

There should be implementations for at least one of appInit() and appStart() (possibly for both) and there may be one implementation for appStop(), if needed.

The class must be public, and it must inherit from DualModeMainClass.

If the software abides by these rules, the initialization/startup/suspend code is written once for all in the appInit(), appStart(), and appStop()methods, however it will work indifferently in Applet mode or in application mode.

This is possible thanks to the wrapping and redirection service provided by the DualModeMainClass superclass, which:

- intercepts calls to init(), start() and stop() methods and redirects them to the appropriate user-defined method.
- provides an abstract framework for organizing initialization, startup and suspend code (appX methods)
- provides an implementation for the go() method, to be called by a specialized main method, if present; the go() method provides an implementation of the correct sequence to call the application.

Further implementation details will not be described, as the man skilled in the art is able to carry out the invention starting from the teaching of the above description.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

A possible variation is the following.

The above description provides for an implementation strategy introducing an intermediate wrapper class W, in order to inherit the implementation of the go() method, as well as to allow other standard services to be inherited from the wrapper class W rather than implemented directly in the application's main class.

However, this is just an improvement that turns out useful when such services do exist. The basic idea can be implemented without even introducing the wrapper class, W.

In this case, the rules for the application's main class are simpler:

- inherit from Applet or from JApplet, as needed.
- implement the init(), start(), and stop() methods directly.
- in the main(..) method, call init() and then start().

## Claims

1. Process for allowing the same Java-based graphical user interface (GUI) application to run either as a stand-alone application or as an Applet,
   **characterized in that** the said application:

   - is developed as an Applet, so that its application main class is a direct or indirect subclass of an Applet or a JApplet;
   - it also implements an entry point method for stand-alone applications, that's the starting point for the application.

2. Process as in claim 1, **characterized in that**:

   - said entry point method for stand-alone application is organized like Applet requires, with the equivalents of the init(), start() and stop() methods, so that it gets called in the proper sequence both when initialization occurs in the Applet mode and when initialization occurs in the Application mode;
   - in Applet mode, init(), start() and stop() methods will be called in the usual way and semantics;
   - in Application mode, a main(..) method is said starting point for the application, and calls init() and start() methods in the correct sequence.

3. Process as in any of claims 1 or 2, **characterized in that**:

   - a wrapper class (W) is provided as a subclass of Applet or JApplet classes;
   - said application main class derives from the wrapper class (W) instead of deriving directly from Applet or JApplet.

4. Process as in claim 3, **characterized in that**:

   - the wrapper class (W) hides all integration details and defines three abstract methods, applnit(), appStart(), appStop(), and one concrete method, go(), which calls applnit() and then appStart();
   - the wrapper class (W) also implements the init(), start() and stop() methods which perform any preliminary initializations and then forward the call to applnit(), appStart() and appStop(), respectively.

5. Process as in claim 4, **characterized in that** the application main class implements the applnit(), appStart(), and appStop() methods with application-specific behavior, and implements said main() method so that it exactly calls the go() method.

6. Process as in claim 4, **characterized in that** the main class of an Applet, as an entry point:

   - derives from an Applet class (or from JApplet, in case of Applets based on the Swing GUI toolkit);
   - implements the init() method, which will be called once for all at the beginning of the Applet's lifetime, to let the software perform any initialization required;
   - implements the start() method, which will be called immediately after the init() method returns, as well as every time a web page containing the Applet instance is redisplayed after it was left;
   - implements the stop() method, which will be called every time the user leaves the web page containing the Applet instance.

7. Process as in claim 2, **characterized in that** the application main class:

   - is inherited from Applet or from JApplet directly;
   - implements the init(), start(), and stop() methods directly;
   - in the main(..) method, calls init() and then start().

8. Computer program comprising computer program code means adapted to perform all the steps of claims 1 to 7 when said program is run on a computer.

9. A computer readable medium having a program recorded thereon, said computer readable medium comprising computer program code means adapted to perform all the steps of claims 1 to 7 when said program is run on a computer.

# Activation Flow (Applet mode)

**class Applet**

init(){

start(){

stop(){
}

**class JApplet**

**Wrapper Class W**

go(){
  init();
  start();
}

init(){
  /*... extra operations ...*/
  appInit();
}

start(){
  /*... extra operations ...*/
  appStart();
}

stop(){
  /*... extra operations ...*/
  appStop();
}

**Application main class**

main(..){
  go();
}

appInit() {
  /* ... app initialization code ... */
}

appStart() {
  /* ... app startup code ... */
}

appStop() {
  /* ... app termination code ... */
}

Applet Start

## FIG. 1

# Activation Flow  (Application mode)

```
class Applet
init(){
}
        start(){
        }
                stop(){
                }
```

```
class JApplet
```

```
Wrapper Class W
 go(){
  init();
  start();
 }
    init(){
      /*... extra operations ...*/
      appInit();
    }
        start(){
          /*... extra operations ...*/
          appStart();
        }
            stop(){
              /*... extra operations ...*/
              appStop();
            }
```

```
Application main class

 main(..){
  go();
 }

  appInit() {
  /* ... app initialization code ... */
  }

     appStart() {
     /* ... app startup code ... */
     }

        appStop() {
        /* ... app termination code ... */
        }
```

## FIG. 2

**European Patent Office**

## EUROPEAN SEARCH REPORT

Application Number

EP 02 29 1704

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LEVITT D.: "WHAT ORDER DO THEY EXECUTE (MAIN(), INIT(), START(), RUN(), PAINT(), ACTION))?"<br>MESSAGE FROM A NEWSGROUP, 'Online!<br>25 July 1997 (1997-07-25), page 1<br>XP002228945<br>Newsgroups: comp.lang.java.programmer<br>'retrieved on 2003-01-28!<br>Message 2 in thread<br>* the whole document * | 1-9 | G06F9/445 |
| X | MARTIN C.: "SHORTEST WRAPPER FOR AN APPLET"<br>MESSAGE FROM A NEWSGROUP,<br> 4 January 1998 (1998-01-04), page 1<br>XP002228946<br>Newsgroups: comp.lang.java.programmer<br>'retrieved on 2003-01-28!<br>* the whole document * | 1-9 | |
| X | FINNEY H.: "HOW ARE MAIN, INIT, AND START RELATED?"<br>MESSAGE FROM A NEWSGROUP, 'Online!<br>10 January 1996 (1996-01-10), pages 1-2,<br>XP002228947<br>Retrieved from the Internet:<br><URL:Newsgroups: comp.lang.java><br>'retrieved on 2003-01-28!<br>Message 2 in thread<br>* the whole document *<br><br>-/-- | 1-9 | TECHNICAL FIELDS SEARCHED (Int.Cl.7)<br><br>G06F |

The present search report has been drawn up for all claims

| Place of search | Date of completion of the search | Examiner |
|---|---|---|
| THE HAGUE | 5 February 2003 | Archontopoulos, E |

**European Patent Office**

**EUROPEAN SEARCH REPORT**

Application Number

EP 02 29 1704

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "APPLICAZIONE E APPLET INSIEME" MESSAGE FROM A NEWSGROUP, 'Online! 28 July 2001 (2001-07-28), pages 1-3, XP002228948 Retrieved from the Internet: <URL:Newsgroups: it.comp.java> 'retrieved on 2003-01-28! message 2 in thread * the whole document * | 1-9 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 5 February 2003 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)